Europäisches Patentamt

European Patent Office

Office européen des brevets

(19)

(11) Numéro de publication: **0 385 885**

**A1**

(12)

# DEMANDE DE BREVET EUROPEEN

(21) Numéro de dépôt: 90420077.1

(51) Int. Cl.⁵: **G05B 9/02, H03K 19/007, G06F 11/00**

(22) Date de dépôt: **14.02.90**

(30) Priorité: 27.02.89 FR 8902638

(43) Date de publication de la demande:
**05.09.90 Bulletin 90/36**

(84) Etats contractants désignés:
**DE ES GB IT**

(71) Demandeur: **MERLIN GERIN**
**2, chemin des Sources**
**F-38240 Meylan(FR)**

(72) Inventeur: **Noraz, Serge**
**Merlin Gerin- Sce. Brevets**
**F-38050 Grenoble Cedex(FR)**
Inventeur: **Nicolaidis, Mihail**
**Merlin Gerin- Sce. Brevets**
**F-38050 Grenoble Cedex(FR)**

(74) Mandataire: **Kern, Paul et al**
**Merlin Gerin Sce. Brevets 20, rue Henri Tarze**
**F-38050 Grenoble Cédex(FR)**

(54) Système de codage en fréquence à haute sûreté de fonctionnement.

(57) Le système de codage en fréquence permet de relier une sortie (S1-Sn) à un générateur de fréquence (12) (état non sûr de la sortie), uniquement lorsqu'en l'absence de panne dans le système, les entrées (I1 - In) associées à la sortie et fournies par un circuit logique autotestable, sont dans l'état logique haut. Dans chaque branche du système, au moins deux interrupteurs (T1 et T2) doivent être commandés simultanément pour autoriser la liaison entre la sortie correspondante et le générateur de fréquence. Une panne simple dans le système n'en modifie pas le comportement ou produit un signal de sortie sûr, et un détecteur de pannes, comportant un générateur de vecteur de test (40) et un analyseur de signature (48), détecte toute panne dont la combinaison avec une autre panne serait susceptible de produire un signal de sortie erroné non sûr.

FIGURE 8

FIGURE 7

EP 0 385 885 A1

## SYSTEME DE CODAGE EN FREQUENCE A HAUTE SURETE DE FONCTIONNEMENT

L'invention concerne un système de codage en fréquence à haute sûreté de fonctionnement.

Les systèmes de logique à panne orientée, ou systèmes de logique dynamique de sécurité, destinés à commander de façon sûre des actionneurs en fonction d'un nombre prédéterminé d'informations logiques, sont très largement utilisés dans les dispositifs de surveillance ou de contrôle dans lesquels la sécurité joue un rôle fondamental.

De tels systèmes présentent néanmoins l'inconvénient d'être très encombrants.

L'invention a pour but de permettre une réduction sensible de l'encombrement de tels systèmes sans en modifier le principe de fonctionnement. On a pensé à utiliser pour cela des techniques éprouvées dans le domaine des circuits intégrés où l'on a conçu des circuits logiques autotestables intégrés sur une puce de silicium. De tels circuits ne peuvent cependant pas remplacer directement la partie logique d'un système de logique à panne orientée car ils fournissent des signaux binaires qui ne sont pas compatibles avec la commande, en fréquence, des actionneurs d'un système de logique à panne orientée.

Le but recherché est atteint au moyen d'un système de codage en fréquence à haute sûreté de fonctionnement selon l'invention, caractérisé en ce qu'il comporte une entrée de fréquence connectée à la sortie d'un générateur de fréquence dont la fréquence F est comprise dans une gamme prédéterminée de fréquences, au moins une sortie associée à une ou plusieurs entrées sur lesquelles sont appliqués les signaux binaires codés de sortie d'un circuit logique autotestable, les signaux de sortie du système étant destinés à commander des actionneurs, le système étant constitué par une pluralité de constituants semi-conducteurs, comportant des interrupteurs commandés par les signaux d'entrée du système, interconnectés de manière à ce que :

- en l'absence de panne dans le système un signal de sortie de fréquence F, dit signal de sortie non sûr, corresponde à un premier état logique prédéterminé du ou des signaux binaires d'entrées associés, et un signal de sortie continu ou de fréquence non comprise dans ladite gamme prédéterminée, dit signal de sortie sûr, corresponde à un second état logique prédéterminé du ou des signaux binaires d'entrée associés

, - une panne simple à l'intérieur du système ne modifie pas le comportement de celui-ci ou produise en sortie un signal de sortie sûr et

- une panne soit détectée par un détecteur de panne avant que ne survienne une autre panne dont la combinaison avec la première serait susceptible de produire un signal de sortie erroné non sûr, le détecteur de panne interrompant la liaison entre le générateur de fréquence et les sorties du système lors de la détection d'une panne.

Un tel système comporte, de préférence, au moins deux interrupteurs commandés dont les électrodes de commande sont reliés à des entrées prédéterminées du système, disposés en série entre le générateur de fréquence et la sortie associée auxdites entrées, et dont seule la conduction simultanée autorise la liaison entre la sortie et le générateur de fréquence.

D'autres avantages et caractéristiques ressortiront plus clairement de l'espace qui va suivre de modes particuliers de réalisation de l'invention, donnés à titre d'exemples non limitatifs et représentés aux dessins annexes sur lesquels :

La figure 1 représente un système de codage en fréquente dont les entrées sont codées au moyen d'un code de Berger.

Les figures 2 et 3 représentent une branche du système selon la figure 1 pour les deux états logiques possibles de l'entrée.

Sur la figure 4 sont référencés les différents points d'une branche du système selon la figure 1 où une panne est susceptible de se produire.

Les figures 5 et 6 représentent respectivement un système de codage en fréquence à entrées dupliquées et tripliquées

La figure 7 représente un système de codage en fréquence selon la figure 1 complété par un détecteur de pannes

La figure 8 représente un mode de réalisation d'un transistor de maintien destiné à être utilisé dans un système de codage selon l'invention.

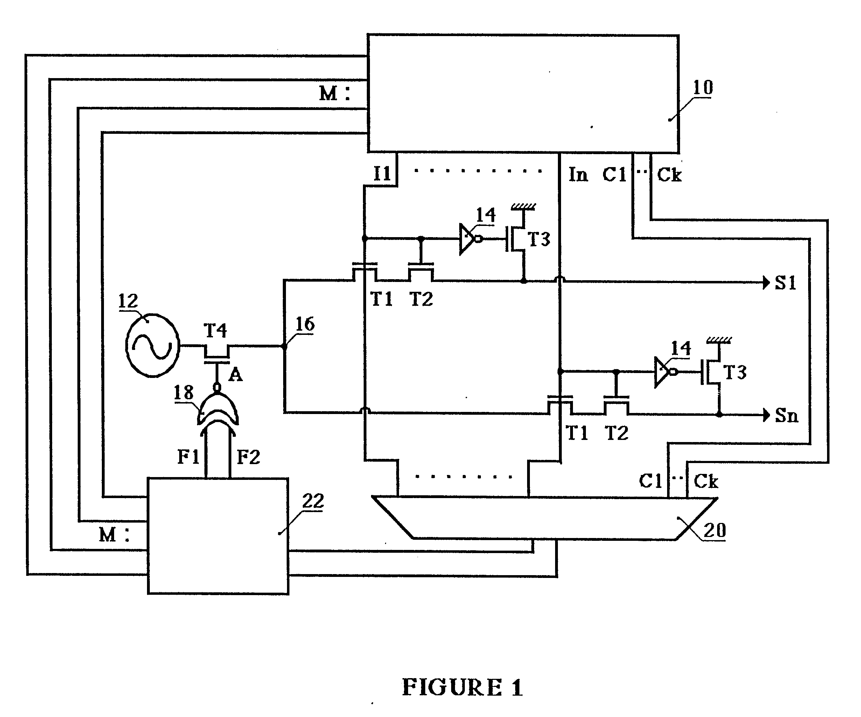

Sur la figure 1, le système de codage en fréquence est connecté aux sorties d'un circuit logique autotestable 10.

Ce circuit, de type connu, est conçu de manière à délivrer n bits d'information, ou bits fonctionnels, I1 à In, et k bits de codage, C1 à Ck. Il peut également fournir des bits M d'indication d'erreur, groupés par paires, les deux bits d'une paire étant identiques (0,0 ou 1,1) lorsqu'une erreur associée à cette paire est détectée dans le circuit autotestable.

Les bits de sortie du circuit 10 sont codés au moyen d'un code séparable, par exemple au moyen d'un code de parité comportant un seul bit de codage ou comme dans le mode de réalisation représenté au moyen d'un code de Berger. Dans ce dernier cas le nombre k de bits de codage est donné par $k = \log_2 \cdot (n + 1)$

Le système de codage est conçu de manière à ce qu'une sortie, S1 à Sn, du système, destinée à la commande d'un actionneur (non représenté), soit associée à chacune des sorties du circuit autotestable délivrant un bit d'information, I1 à In.

En fonctionnement normal, les sorties binaires fonctionnelles, I1 à In, du circuit autotestable doivent être transformées en sorties S1 à Sn codées en fréquence, un signal de fréquence F prédéterminée étant présent sur une sortie Si lorsque le signal d'entrée Ii associé est à l'état logique 1.

Le système de codage comporte un générateur de fréquence 12 produisant un signal alternatif dont la fréquence F est comprise dans une gamme prédéterminée de fréquences.

Si l'on dispose un interrupteur commandé, par exemple un transistor à effet de champ entre la sortie du générateur de fréquence et une sortie Si, la grille du transistor étant connectée à la sortie Ii, on obtient le codage en fréquence recherché. Cependant un tel système n'est pas sûr, un collage en position de conduction du transistor se traduisant par une liaison entre la source de fréquence 12 et la sortie Si quel que soit l'état logique de l'entrée Ii associée.

Le système représente sur la figure 1 est un système dit sûr ("fail-safe") Un signal de sortie de fréquence F correspond à un état considéré comme non sûr, sa présence accidentelle pouvant conduire en aval du système à une situation dangereuse. Par contre, tout signal de sortie continu ou de fréquence différente de F, c'est à dire n'appartenant pas à la gamme précitée de fréquences, est considéré comme sûr. Pour que le système soit sûr, il faut qu'une sortie devant être dans un état sûr en l'absence de panne, ne puisse passer dans un état non sûr en présence d'une panne simple appartenant à un ensemble de pannes simples répertoriées susceptibles d'affecter les composants du système.

Autrement dit, toute sortie erronée produite par une panne doit être une sortie dont l'état est sûr.

Pour cela chaque branche du système, disposée entre le générateur de fréquence 12 et une sortie Si, comporte au moins deux interrupteurs commandés dont seule l'activation simultanée autorise une liaison entre le générateur de fréquence et la sortie considérée.

Ainsi, la sortie S1 est reliée au générateur 12 par deux transistors à effet de champ T1 et T2 disposés en série et dont les grilles sont toutes deux connectées à la sortie I1 associée du circuit autotestable 10. Un signal de fréquence F ne peut être présent sur la sortie S1 que lorsque le signal d'entrée I1 est à l'état logique 1, rendant les deux transistors T1 et T2 simultanément conducteurs. Lorsque le signal d'entrée I1 est à l'état logique 0, les transistors T1 et T2 sont bloqués et la liaison est interrompue entre le générateur de fréquence 12 et la sortie S1. En raison de la redondance, la panne simple précitée, constituée par le collage de l'un des transistors T1 ou T2 en position de conduction, ne peut conduire à une sortie non sûre. Cependant, en l'absence d'autres mesures, lorsque l'entrée I1 est à l'état logique 0, les deux transistors étant bloqués, la sortie S1, qui est en haute impédance, peut être sensible aux parasites. Pour limiter le risque de la présence en sortie d'un signal de fréquence F dû a des parasites, il est souhaitable d'écarter les unes des autres, les différentes branches du système et un transistor à effet de champ T3 est disposé entre la sortie S1 et une tension continue, la masse dans le mode de réalisation représenté. La grille de ce transistor T3 est connecté par l'intermédiaire d'un inverseur 14 à l'entrée I1.

Ainsi, lorsque le signal d'entrée I1 est à l'état logique 1, la grille du transistor T3 est à l'état logique 0 et le transistor, bloqué, ne joue aucun rôle. Par contre, lorsque le signal d'entrée I1 est à l'état logique 0, bloquant les transistors T1 et T2, la sortie de l'inverseur 14 est à l'état logique 1 et le transistor T3 conduit, forçant la sortie S1 à la masse. Cette conception permet de plus, de diminuer la probabilité de présence d'une panne multiple susceptible de rendre le système non sûr.

Comme représenté sur la figure 1, toutes les branches du système, dispersées entre une sortie Si et un point commun 16, sont constitués de la même manière.

Le point 16 commun à toutes les branches est connecté au générateur 12 par l'intermédiaire d'un transistor à effet de champ T4 dont la grille est reliée à la sortie d'une porte logique 18, du type OU EXCLUSIF.

En l'absence de panne, les deux signaux (F1 et F2) d'entrée de la porte logique 18 sont différents, sa sortie A est à l'état logique 1 et le transistor T4 est conducteur.

Un contrôleur 20 reçoit en entrée à la fois les bits d'information, I1 à In, et les bits de codage, C1 à Ck, fournis par le circuit logique autotestable 10. Si les informations sont codées par un code de parité il s'agit d'un contrôleur de parité. Si, comme dans le mode de réalisation selon la figure 1, elles sont codées au moyen d'un code de Berger, le contrôleur 20 est un contrôleur de Berger, de type connu. Un tel contrôleur reconstitue des bits de codage à partir des bits d'information qu'il reçoit et compare ces bits de codages reconstitués aux bits de codage, C1 à Ck, qui lui sont fournis par le circuit 10. Si les codes ne sont pas identiques, le contrôleur considère que l'information transmise par le circuit autotestable 10 est incorrecte et produit deux bits identiques (0,0 ou 1,1).

Ces deux bits sont utilisés pour bloquer le transistor T4 en étant appliqués aux entrées de la porte 18, soit directement, soit comme représenté sur la figure, par l'intermédiaire d'un contrôleur double-rail global 22.

Le contrôleur 22 reçoit non seulement les sorties du contrôleur 20, mais également les bits M d'indication d'erreur produits par le circuit autotestable.

En cas d'erreur détectée soit par le circuit autotestable 10 (bits I d'une paire de bits de détection d'erreurs M identiques) soit par le contrôleur de Berger 20 (bits de sortie identiques) les deux bits F1 et F2 de sortie du contrôleur 22, appliqués aux entrées de la porte 18, sont identiques.

La sortie A de la porte 18 passe alors à l'état logique 0, bloquant le transistor T4 et interrompant les liaisons entre le générateur de fréquence 12 et l'ensemble des sorties, S1 à Sn du système qui sont ainsi automatiquement placées dans un état sûr.

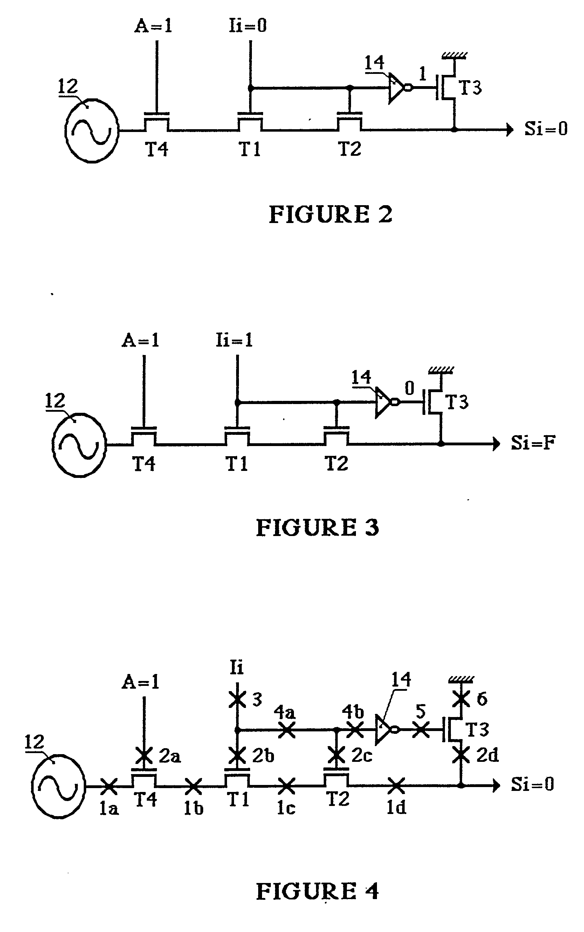

On a représenté sur les figures 2 et 3, en l'absence de panne, la liaison entre une sortie Si et le générateur 12, respectivement pour les deux états logiques possibles de l'entrée li associée : li = 0 sur la figure 2 et li = 1 sur la figure 3. Dans le premier cas, les transistors T1 et T2 sont bloqués, les transistors T3 et T4 sont conducteurs et la sortie Si est à 0. Dans le second cas, les transistors T1, T2 et T4 sont conducteurs, le transistor T3 est bloqué et le signal de sortie Si est un signal de fréquence F.

Les conséquences des diverses pannes simples susceptibles de se produire sont indiquées ci-dessous, en référence à la figure 4, en précisant l'état de la sortie Si en fonction de l'état logique de l'entrée li :

1. Collage de T1, T2 ou T4 à l'état de conduction, ou collage à 1 en 2a, 2b ou 2c, ou court-circuit 1a - 1b, 1b - 1c ou 1 c - 1 d :
- li = 0 : T1 ou T2 restent bloqués, T3 conducteur, sortie inchangée, Si = 0
- li = 1 : sortie inchangée, Si = F

2. Collage de T1, T2 ou T4 à l'état de blocage ou coupure en 1a, 1b, 1c, 1d, 2a, 2b ou 2c, ou collage à 0 de 2a, 2b ou 2c :
- li = 0, sortie inchangée, Si = 0
- li = 1, la sortie n'est plus reliée au générateur de fréquence, T3 est bloqué et la sortie reste flottante.

3. Collage de T3 à l'état de conduction, ou court-circuit 6 - 2d, ou collage à 1 en 5, ou collage à 0 en 1a, 1b, 1c, 1d, 2d, 3, 4a ou 4b
- li = 0 : sortie inchangée, Si = 0
- li = 1 : la sortie est forcée à 0, Si = 0

4. Collage de T3 à l'état de blocage, ou coupure en 4b, 5, 6 ou 2d, ou collage à 0 en 5, ou collage à 1 en 4a ou 4b, ou court-circuit 5-6
- li = 0 : la sortie n'est plus forcée à 0 et reste flottante
- li = 1 : sortie inchangée, Si = F

5. Court circuit 1a - 2a, 1b - 2a, 1b - 2b, 1c- 2b, 1c - 2c, 1d - 2c, ou collage à 1 en 1a, 1b ou 1c
- li = 0 : sortie inchangée, Si = 0
- li = 1 : sortie forcée à 1, Si = 1

6. Coupure en 3 ou 4a :
li = 0 : sortie flottante
li = 1 : sortie flottante

7. Court-circuit 2d - 5 :
li = 0, sortie forcée à 1, Si = 1
li = 1, sortie forcée à 0, Si = 0

8. Collage à 1 en 6 :
- li = 0 : sortie forcée à 1, Si = 1
- li = 1 : sortie inchangée, Si = F

9. Collage à 1 en 1d ou 2d :
- li = 0 : sortie forcée à 1, Si = 1
- li = 1 : sortie forcée à 1, Si = 1

10. Court-circuit 4b - 5
- li = 0 : sortie flottante
- li = 1 : T3 conduit, sortie forcée à 0, Si = 0

11. Collage à 1 en 3
- li = 0 : T3 est bloqué, le contrôleur 20 reçoit une valeur erronée de li ; en conséquence A = 0 et T4 ne conduit pas, sortie flottante

- Ii = 1 : sortie inchangée

Il est à noter que le contrôleur 20 reçoit également une valeur erronée de Ii en cas de coupure en 2b ou en 3, lorsqueli = 1 en cas de collage à 0, en 2b ou en 3, et lorsque Ii = 0 en cas de collage à 1 en 2b.

Par ailleurs, lorsque la sortie est flottante pour Ii = 0, la sortie en haute impédance reste sensible aux parasites. Pour limiter ce risque un transistor supplémentaire peut-être disposé en parallèle sur T3

En se référant à l'état normal de fonctionnement représenté sur les figures 2 et 3, on constate que la présence dans le système de l'une des pannes simples répertoriées ci-dessus ne modifie pas son comportement ou donne lieu à une situation sûre en sortie. En aucun cas une de ces pannes simples ne peut conduire à un état non sûr (Si = F) de la sortie alors que l'entrée I i correspondante est à l'état logique 0. Ce système peut donc être qualifié de système sûr ("fail safe")

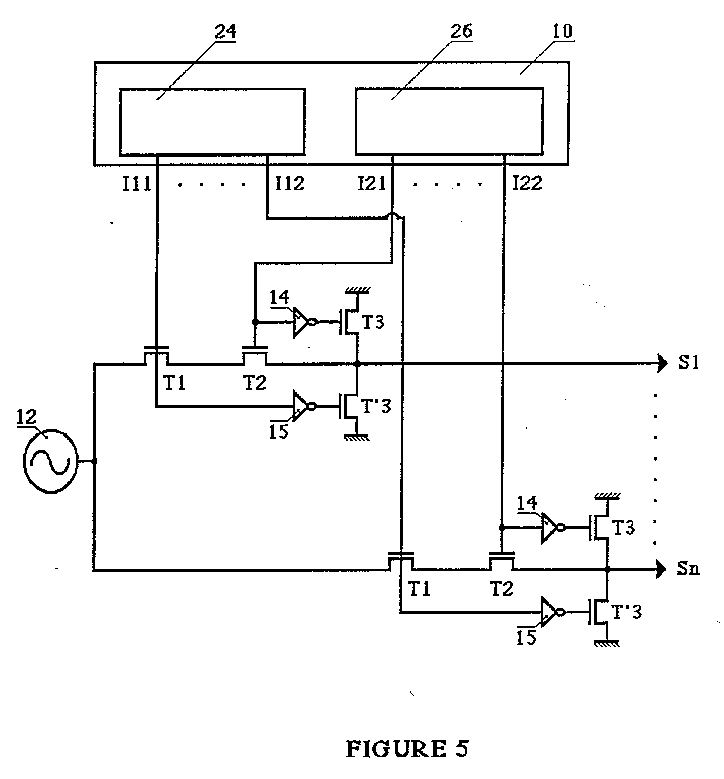

De façon analogue la figure 5 représente un système sûr de codage en fréquence destiné à être connecté à un circuit autotestable 10 dont les sorties sont dupliquées. Le circuit 10 comporte deux sous-systèmes 24 et 26 dont les sorties I1i et I2i sont identiques en l'absence de panne à l'intérieur du circuit autotestable.

Chaque branche du système est constitué comme précédemment par deux transistors T1 et T2 disposés en série entre le générateur de fréquence 12 et une sortie Si. La grille du premier transistor T1 d'une branche est connectée à la sortie I1i du sous-système 24, tandis que la grille du second transistor T2 est connectée à la sortie correspondante I2i du sous-sytème 26. La liaison entre la sortie Si et le générateur de fréquence ne peut donc être complétée par la mise en conduction simultanée des transistors T1 et T2, lorsque I1i = I2i = 1. Si les deux signaux I1i et I2i sont à l'état logique 0 ou si l'un d'eux seulement, en raison d'une panne dans le circuit autotestable 10, est à l'état logique 0, la liaison est interrompue. Des transistors T3 et T'3, connectés entre la masse et la sortie et contrôlés respectivement, après inversion (inverseurs 14 et 15) par les signaux I1i et I2i, forcent la sortie à zéro lorsque l'un des transistors n'est pas conducteur.

On peut, comme dans le cas précédent, montrer que toutes les pannes simples susceptibles de se produire dans le système, qu'il s'agisse d'un collage à l'état de conduction ou à l'état de blocage d'un transistor, d'un collage à 0 ou à 1 d'un point du système, d'une coupure ou d'un court-circuit, ne modifient pas le comportement du système ou donnant lieu à une situation sûre en sortie.

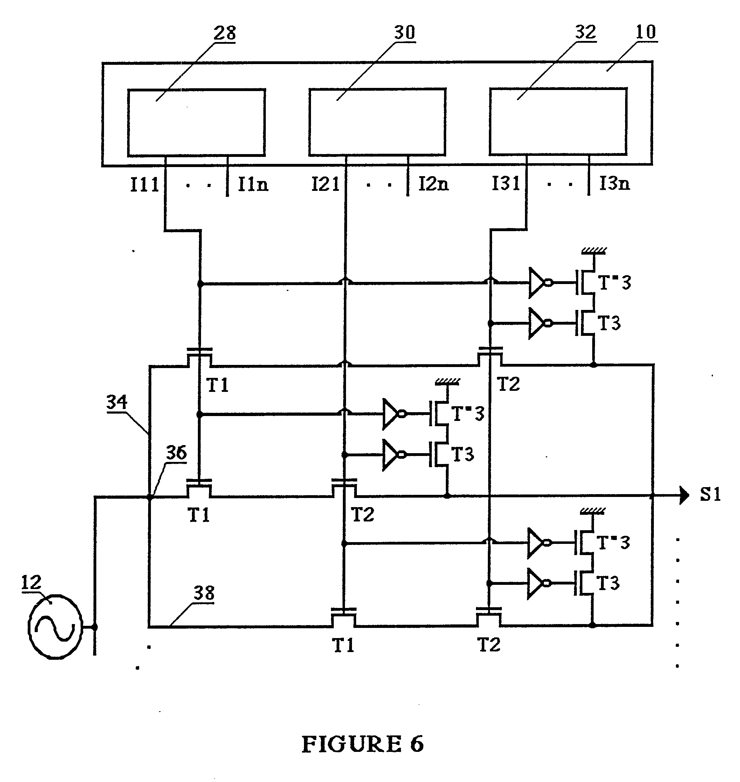

Sur la figure 6 on a représenté un système sûr de codage en fréquence destiné à être connecté à un circuit autotestable 10 dont les sorties sont triplquées.

Le circuit 10 comporte trois sous systèmes 28, 30 et 32 dont les sorties I1i, I2i et I3i sont identiques en l'absence de panne à l'intérieur du circuit autotestable. Chaque branche du système, reliant une sortie Si au générateur de fréquence 12, est constituée par la mise en parallèle de trois branches élémentaires 34, 36 et 38. Chaque branche élémentaire comporte, comme dans les systèmes précédents, deux transistors T1 et T2 disposés en série entre le générateur de fréquence 12 et la sortie Si. Les grilles des transistors T1 et T2 de la première branche élémentaire 34 sont connectées respectivement aux sorties I1i et I3i des sous-systèmes 28 et 32. Les grilles des transistors T1 et T2 de la seconde branche élémentaire 36 sont connectées respectivement aux sorties I1i et I2i des sous-systèmes 28 et 30, tandis que les grilles des transistors T1 et T2 de la troisième branche élémentaire 38 sont connectées respectivement aux sorties I2i et I3i des sous-systèmes 30 et 32. En l'absence de panne dans le circuit autotestable 10, ses trois sorties I1i, I2i et I3i, sont identiques et les trois branches élémentaires se comportent comme une branche des systèmes précédemment décrits, reliant la sortie S1 au générateur 12 lorsque les sorties du circuit 10 sont à 1 et interrompant cette liaison lorsqu'elles sont à 0.

La redondance matérielle des trois branches élémentaires permet d'obtenir en sortie le résultat prévu même si l'une des sorties du circuit autotestable 10 est erronée.

Le système réalise en effet un vote majoritaire entre ses trois entrées associées I1i, I2i et I3i et fournit une sortie Si correspondant à l'état logique des deux entrées qui sont identiques. A titre d'exemple, si I1i = I2i = 1, la branche élémentaire 36 assure la liaison entre Si et le générateur 12 bien que les branches élémentaires 34 et 38 soient interrompues si I3i = 0.

De même, deux entrées I1i et I2i à l'état logique 0 suffisent pour interrompre les trois branches élémentaires.

La sortie de chaque branche élémentaire est connectée à la masse par l'intermédiaire de deux transistors T3 et T''3 disposés en série et contrôlés respectivement, après inversion, par les signaux appliqués aux grilles des transistors T1 et T2 de la dite branche élémentaire.

Ces transistors permettent donc de forcer la sortie Si à zéro lorsque les deux entrées d'une branche élémentaire sont à l'état logique 0.

On peut montrer que toutes les pannes simples susceptibles de se produire dans le système selon la

EP 0 385 885 A1

figure 6 ne modifient pas le comportement du système ou donnent lieu à une situation sûre en sortie. Ce système peut donc également être qualifié de système sûr.

Dans tous les systèmes décrits ci-dessus, une panne simple ne peut conduire à un état non sûr en sortie. Cependant une panne multiple, constituée par la superposition de plusieurs pannes simples peut, dans certains cas, conduire à une liaison non désirée d'une sortie et du générateur de fréquence. A titre d'exemple, dans le circuit de la figure 1, le collage à 1 simultané de la grille de T4 et de l'entrée I1, conduit à un état non sûr, non désiré, de la sortie S1 lorsque l'entrée I1 devrait être à l'état logique 0. Des dispositions additionnelles doivent donc être prises pour obtenir un système à haute sûreté de fonctionnement ("strongly fail safe"), c'est-à-dire un système qui reste sûr même en présence de pannes multiples. On part néanmoins de l'hypothèse que deux pannes simples ne peuvent survenir simultanément et qu'une panne multiple est donc constituée par la superposition à un instant donné, de pannes simples survenues antérieurement à des instants successifs.

Pour obtenir le but recherché un système de codage sûr est complété de manière à assurer la détection d'une panne, par un détecteur de pannes, avant que ne survienne une autre panne dont la combinaison avec la première serait susceptible de produire un signal de sortie erroné non sûr. Le détecteur de pannes interrompt la liaison entre le générateur de fréquence et l'ensemble des sorties du système lors de la détection d'une panne. Il est à noter qu'il n'est pas indispensable que le détecteur de pannes détecte toutes les pannes simples susceptibles de survenir dans le système, mais qu'il faut que le système reste sûr en présence d'une panne simple indétectable.

Pour la détection des pannes du système, on utilise des techniques connues sous le nom de techniques de type BIST ("Built in self test"), qui permettent une réalisation sous forme de circuit intégré.

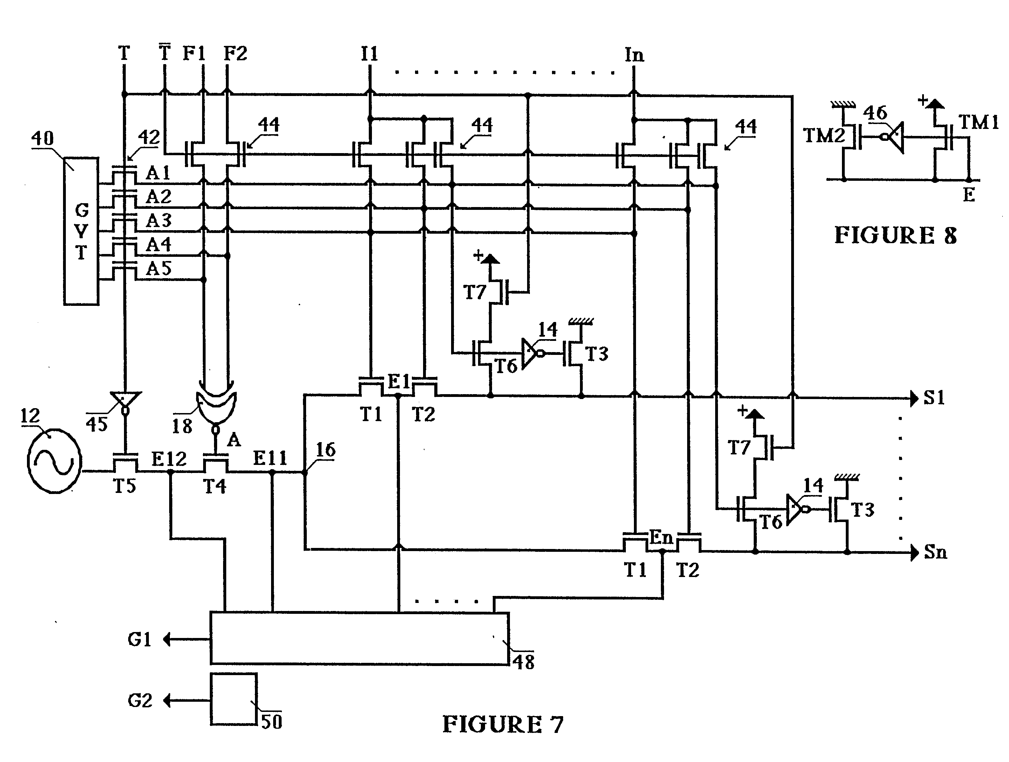

La figure 7 représente un exemple de réalisation d'un système de codage à haute sûreté de fonctionnement développé à partir d'un système selon la figure 1. Afin de ne pas compliquer inutilement la figure, le circuit autotestable 10, les contrôleurs 20 et 22 ont été mis sur la figure.

Un générateur de vecteur de test (GVT) 40, utilisé pour le test hors ligne du système, produit une séquence de test destinée à mettre en évidence au moins toutes les pannes simples susceptibles de provoquer un signal de sortie erroné non sûr en combinaison avec une panne ultérieure.

Le générateur de vecteur de test comporte 5 sorties A1, A2, A3, A4, A5, connectées à des points tests du système, respectivement à l'entrée de l'inverseur 14, à la grille des tansistors T2 et T1 de chaque branche du système, et aux deux entrées de la porte logique 18. Dans le mode de réalisation représenté, ces connexions se font par l'intermédiaire de transistors 42 dont les grilles reçoivent un signal T de test pendant toute la durée d'une séquence de test. De plus des transistors 44, dont la grille reçoit un signal complémentaire du signal de test, sont disposés entre chacun des points tests et la sortie associée (I1 à In) du circuit autotestable 10 ou F1, F2 du contrôleur 22.

Un transistor T5, dont la grille est reliée à la sortie d'un inverseur 45 dont l'entrée reçoit le signal T de test, est connecté entre le générateur de fréquence 12 et le transistor T4.

De cette manière, en dehors d'une séquence de test, les transistors 44 sont conducteurs et les points tests sont normalement reliés aux entrées correspondantes (Ii, F1, F2) du système, tandis que pendant une séquence de test les transistors 44 sont bloqués isolant les points tests des entrées correspondantes du système et les transistors 42 sont conducteurs connectant ainsi les points tests aux sorties du générateur de vecteur de test. L'ensemble du système est également isolé du générateur de fréquence, en raison du blocage du transistor T5, pendant la séquence de test.

Un vecteur de test est consitué par l'ensemble des signaux binaires présents à un moment donné sur les sorties A1 à A5 du générateur de vecteur de test 40. Pendant une séquence de test, celui-ci génère une séquence prédéterminée du vecteur de tests, dont la constitution et la succession sont telles que toutes les pannes à détecter peuvent être mises en évidence par observation d'un certain nombre de sorties de test. Dans le mode de réalisation représenté, chaque branche comporte une sortie de test Ei disposée au point commun entre les transistors T1 et T2. Des sorties de test E11 et E12 sont situées de part et d'autre du transistor T4, dans la partie commune à toutes les branches.

Dans chaque branche le circuit de test est complété par des transistors T6 et T7 disposés en série entre la sortie Si et la tension d'alimentation correspondant à l'état logique 1. La grille du transistor T6 est reliée à l'entrée de l'inverseur 14 et la grille du transistor T7 au signal de test T. Ainsi, lors d'une séquence de test, le transistor T7 est toujours en état de conduction et, lorsque le signal de test A1 est à l'état logique 0, le transistor T6 est bloqué et le transistor T3 conducteur, forçant la sortie Si à 0. Par contre, lorsque le signal de test A1 est à l'état logique 1, le transistor T6 est conducteur et le transistor T3 bloqué, forçant la sortie Si à 1.

Les états logiques des sorties de test E1 à En, E11 et E12 sont fonction des vecteurs de test appliqués au système et de la présence ou de l'absence de pannes dans le système.

6

Dans certains cas, une sortie de test, telle que représentée sur la figure 7, peut-être flottante, c'est-à-dire dans aucun des états logique 0 à 1 prédéterminés. C'est le cas, par exemple, de la sortie de test Ei lorsque ni le transistor T1, ni le transistor T2 ne sont conducteurs. Pour éliminer toute incertitude on dispose des transistors de maintien, représentés sur la figure 8, en chacun des points de sortie de test.

Ces transistors de maintien ont pour fonction de maintenir un point du circuit à l'état logique précédent lorsque ce point est isolé du reste du circuit. En chaque point E de sortie de test, on dispose deux transistors de maintien, un premier transistor TM1, connecté entre le point considéré et la tension d'alimentation positive correspondant' à l'état logique 1, et dont la grille est reliée au point considéré, et un second transistor TM2, connecté entre ledit point et la masse, et dont la grille est reliée à la précédente par un inverseur 46. Ainsi, si le point E de sortie de test est à la masse, le transistor TM2 est conducteur et le point reste à la masse s'il est isolé du reste du circuit, tandis que si le point E est à l'état logique 1 c'est le transistor TM1 qui est conducteur et le maintient dans cet état logique en cas d'isolation du reste du circuit. On peut vérifier que les pannes susceptibles d'apparaître dans ces transistors de maintien conservent sa qualité de sûreté au système.

Les sorties de test E1 à En, E11 et E12 sont connectées aux entrées d'un analyseur de signature 48. L'analyseur de signature, de type connu, constitué par un registre à rebouclage, élabore en G1 une signature à partir des états logiques successifs des sorties de test qui lui sont apliqués au cours d'une séquence de test. Selon un mode de réalisation préférentiel l'analyseur de signature sera conçu, et initialisé au début d'une séquence de test, de manière à ce que, en l'absence de panne dans le système, la signature finale obtenue soit une suite de bits où alternent les 1 et les 0, par exemple 010101...

Un circuit complémentaire 50 servant de référence, génère en G2 une signature de référence complémentaire(10101...). Les signaux G1 et G2 sont appliqués au contrôleur double-rail global 22 (figure 1).

Toute panne conduisant à une modification de l'état logique d'au moins une des sorties de test, par rapport à l'état attendu de cette sortie, entraîne une modification de la signature G1 produite par l'analyseur de signature à la fin d'une séquence de test. En cas de coïncidence d'un des bits des signatures G1et G2, c'est à dire dès qu'une panne est détectée, le contrôleur 22 produit des bits F1 et F2 identiques et la sortie A de la porte 18 passe à l'état logique 0, bloquant le transistor T4 et mettant les sorties S1 à Sn dans un état sûr.

Le tableau ci-dessous illustre une séquence de vecteurs de test permettant de détecter toutes les pannes susceptibles de se produire dans le système reprèsenté sur les figures 7 et 8, sauf le collage en position de blocage du transistor T4. Cette dernière panne peut ne pas être détectée car elle interrompt automatiquement la liaison entre le générateur de fréquence 12 et les sorties S1 à Sn du système. On a également indiqué dans le tableau les états logiques attendus des sorties de test Ei, E11 et E12 et du signal A en l'absence de panne dans le système.

| Vecteur de Test N° | A1 | A2 | A3 | A4 | A5 | A | Si | Ei | E11 | E12 |
|---|---|---|---|---|---|---|---|---|---|---|
| 1 | 1 | 1 | 1 | 1 | 0 | 1 | 1 | 1 | 1 | 1 |
| 2 | 0 | 1 | 1 | 1 | 0 | 1 | 0 | 0 | 0 | 0 |
| 3 | 1 | 1 | 1 | 0 | 0 | 0 | 1 | 1 | 1 | 0 |
| 4 | 0 | 1 | 1 | 0 | 1 | 1 | 0 | 0 | 0 | 0 |
| 5 | 1 | 1 | 1 | 0 | 1 | 1 | 1 | 1 | 1 | 1 |
| 6 | 0 | 1 | 1 | 1 | 1 | 0 | 0 | 0 | 0 | 1 |
| 7 | 1 | 1 | 0 | 1 | 1 | 0 | 1 | 1 | 0 | 1 |
| 8 | 0 | 0 | 0 | 0 | 0 | 0 | 0 | 1 | 0 | 1 |

On peut montrer que cette séquence de vecteurs de test permet de détecter toutes les pannes simples répertoriées en référence aux figures 1 à 4.

Pour que le test hors ligne du système ne perturbe pas le fonctionnement de celui-ci, tous les éléments du détecteur de panne, à savoir le générateur de vecteur de test 40, l'analyseur de signature 48 et le circuit complémentaire 50, fonctionnent à une fréquence très élevée par rapport à la fréquence F. A titre d'exemple la fréquence F peut-être de l'ordre de 1 kHz et la fréquence d'horloge des éléments du détecteur de pannes est supérieure à 20 kHz.

Dans un mode de réalisation préférentiel, cette fréquence est de l'ordre de 1 MHz. Le fonctionnement normal du système peut donc être interrompu pendant un temps très court, durée du signal de test T, pour permettre une séquence de test.

Les modifications, en haute fréquence des signaux de sortie S1 à Sn dues à une séquence de test sont considérées comme des parasites par les actionneurs situés en aval du système et ne perturbent pas leur fonctionnement. Afin qu'une panne soit mise en évidence avant que ne survienne éventuellement une seconde panne il est indispensable que les séquences de test soient répétées périodiquement avec une période très inférieure au temps moyen entre deux pannes ("MTBF"). On réalise avantageusement plusieurs séquences de test pendant une demi-période du signal de sortie du générateur de fréquence 12. Il faut néanmoins s'assurer que la séquence de test n'est pas réalisée au moment d'un changement d'état du signal de sortie du générateur de fréquence. Ceci peut-être réalisé très simplement par une synchronisation du signal de test T sur le signal de fréquence F.

Les interrupteurs commandés du système sont de préférence constitués par des transistors à effet de champ à grille isolée de tyoe MOSFET et l'ensemble du système et du circuit logique autotestable peut-être intégré sur une même plaquette.

L'invention n'est en aucune manière limitée aux modes de réalisation particuliers représentés. En particulier, les principes décrits permettent la réalisation de systèmes de codage à haute sûreté de fonctionnement destinés à coder les sorties du circuit autotestable quel que soit le type de codage retenu. La structure du détecteur de pannes et la séquence de vecteurs de test seront eux aussi adaptés en fonction du type de codage des informations à l'entrée du système et de l'ensemble des pannes répertoriées susceptibles de se produire.

On peut également, dans certains cas, améliorer encore la sûreté en dupliquant certains éléments comme le transistor T4, la porte 18 ou les transistors T3.

## Revendications

1. Système de codage en fréquence à haute sûreté de fonctionnement, caractérisé en ce qu'il comporte une entrée de fréquence connectée à la sortie d'un générateur de fréquence (12) dont la fréquence F est comprise dans une gamme prédéterminée de fréquences, au moins une sortie (S1-Sn) associée à une ou plusieurs entrées (I1-In ; I11-I1n ; I21-I2n ; I31-I3n) sur lesquelles sont appliqués les signaux binaires codés de sortie d'un circuit logique autotestable (10), les signaux (S1-Sn) de sortie du système étant destinés à commander des actionneurs, le système étant constitué par une pluralité de constituants semi-conducteurs, comportant des interrupteurs commandés par les signaux d'entrée du système, interconnectés de manière à ce que :
- en l'absence de panne dans le système un signal de sortie (Si) de fréquence F, dit signal de sortie non sûr, corresponde à un premier état logique prédéterminé (1) du (I1) ou des (I1i, I2i, I3i) signaux binaires d'entrées associés, et un signal de sortie (Si) continu ou de fréquence non comprise dans ladite gamme prédéterminée, dit signal de sortie sûr, corresponde à un second état logique prédeterminé (0) du (Ii), ou des (I1i, I2i, I3i) signaux binaires d'entrée associés,
- une panne simple à l'intérieur du système ne modifie pas le comportement de celui-ci ou produise en sortie un signal de sortie sûr et
- une panne soit détectée par un détecteur de panne (40, 48, 50) avant que ne survienne une autre panne dont la combinaison avec la première serait susceptible de produire un signal de sortie erroné non sûr, le détecteur de panne interrompant (F1, F2, 18, A, T4) la liaison entre le générateur de fréquence (12) et les sorties (S1-Sn) du système lors de la détection d'une panne.

2. Système selon la revendication 1, caractérisé en ce qu'il comporte au moins deux interrupteurs commandés (T1, T2), dont les électrodes de commande sont reliés à des entrées (Ii; I1i, I2i ou I3i) prédéterminées du système, disposés en série entre le générateur de fréquence (12) et la sortie (Si) associée auxdites entrées, et dont seule la conduction simultanée autorise la liaison entre la sortie et le générateur de fréquence.

3. Système selon la revendication 2, caractérisé en ce que les signaux (I11 - I1n, I21 - I2n) de sortie du circuit logique autotestable (10, 24, 26) étant des signaux dupliqués, l'entrée de fréquence du système est connectée à chaque sortie (Si) par l'intermédiaire de deux interrupteurs commandés (T1, T2) en série, dont les électrodes de commande sont respectivement connectées à deux entrées (I1i, I2i) du système associées à ladite sortie et, par l'intermédiaire d'inverseurs (14, 15), aux électrodes de commande de deux autres interrupteurs commandés (T3, T'3) connectant la sortie (Si) à une tension d'alimentation continue prédéterminée correspondant à l'un des états logiques (0) des signaux binaires du système.

4. Système selon la revendication 2, caractérisé en ce que le circuit autotestable (10) délivrant sur n sorties d'informations (I1-In) connectées aux entrées du système et k sorties de codage (C1-Ck), des signaux binaires codés au moyen d'un code séparable, avec n > 1 et k > 1 l'entrée de fréquence du système est connectée à chaque sortie (Si) par l'intermédiaire de deux premiers interrupteurs commandés (T1, T2) en série, dont les électrodes de commande sont toutes deux connectées à une même entrée (Ii), associée à ladite sortie, et, par l'intermédiaire d'un inverseur (14), à l'électrode de commande d'un troisième interrupteur commandé (T3) connectant la sortie (Si) à une tension d'alimentation continue prédéterminée correspondant à l'un des états logiques (0) des signaux binaires du système, les sorties de codage (C1-Ck) du circuit autotestable (10) et les électrodes de commande des deux premiers interrupteurs connectés (T1, T2) étant reliés aux entrées d'un circuit de détection d'erreur (20, 22, 18) produisant un signal d'erreur (A) appliqué à l'électrode de commande d'un interrupteur commandé (T4) disposé entre le générateur de fréquence (12) et les premiers interrupteurs commandés (T1) de manière à interrompre la liaison entre le générateur (12) et les sorties (Si) du système si une erreur est détectée par le circuit de détection d'erreur.

5. Système selon la revendication 4, caractérisé en ce que le circuit de détection d'erreur comporte un contrôleur de code séparable 20 dont les sorties, qui produisent deux signaux de sortie identiques en cas d'erreur, sont connectés aux entrées d'une porte logique (18) de type OU EXCLUSIF, dont la sortie (A) constitue la sortie du circuit de détection d'erreur.

6. Système selon la revendication 5, caractérisé en-ce que le circuit de détection d'erreur comporte un contrôleur double-rail global (22) intercalé entre les sorties du contrôleur de code séparable (20) et les entrées de la porte logique (18) et recevant également en entrée des bits (M) d'indication d'erreur produits par le circuit autotestable.

7. Système selon la revendication 2, caractérisé en ce que les signaux (I11-I1n, I21-I2N, I31- I3n) de sortie du circuit logique autotestable (10,28,30,32) étant des signaux tripliqués, l'entrée de fréquence du système est connectée à chaque sortie (Si) par l'intermédiaire de trois branches élémentaires (34, 36, 38) disposées en parallèle et comportant chacune deux interrupteurs commandés (T1, T2) en série, trois entrées (I1i, I2i, I3i) du système associée à ladite sortie étant respectivement connectées par paires aux électrodes de commande des interrupteurs commandés des trois branches élémentaires, la sortie de chaque branche élémentaire étant connectée à une tension d'alimentation continue prédéterminée correspondant à l'un des états logiques (0) des signaux binaires du système par deux interrupteurs commandés (T3, T''3), disposés en série, dont les électrodes de commande sont respectivement reliées, par l'intermédiaire d'inverseurs, aux entrées du système associées à ladite branche élémentaire.

8. Système selon l'une quelconque des revendications 1 à 7, caractérisé en ce que le détecteur de pannes comporte un générateur de vecteur de test (40) dont les sorties sont connectées à des points tests du système de manière à appliquer sur ces points, durant une séquence de test, une succession de signaux binaires prédéterminés, des sorties de test (E1-En, E11, E12) disposées en des emplacements prédéterminés du système étant connectées aux entrées d'un analyseur de signature (48) qui élabore une signature (G1) à partir des états logiques successifs pris par les sorties de test au cours de la séquence de test, le détecteur de pannes comportant des moyens (22) de comparaison de ladite signature (G1) et d'une signature (G2) de référence et élaborant un signal (A) d'erreur lorsque la signature (G1) est incorrecte, ledit signal d'erreur (A) étant appliqué à l'électrode de commande d'un interrupteur commandé (T4) disposé en aval du générateur de fréquence (12) de manière à interrompre toute liaison entre le générateur de fréquence et les sorties (S1 - Sn) du système lorsque le signal d'erreur (A) est à l'état logique 0.

9. Système selon la revendication 8, caractérisé en ce que la fréquence de fonctionnement du détecteur de pannes (40, 48, 50) est très supérieure à la fréquence F du générateur de fréquence (12), une séquence de test étant réalisée périodiquement, plusieurs fois pendant une demi-période du signal de sortie du générateur de fréquence.

10. Système selon l'une des revendications 8 et 9, caractérisé en ce qu'une série (42) d'interrupteurs commandés connecte les sorties du générateur de vecteur de test aux points tests correspondants uniquement pendant la durée d'une séquence de test, les entrées (I1 - In, F1, F2) du système étant isolées des points tests, pendant ladite durée, par une seconde série (44) d'interrupteurs commandés.

9

FIGURE 1

EP 0 385 885 A1

A=1　　Ii=0

14　　　1

12

T4　　T1　　T2　　T3

Si=0

**FIGURE 2**

A=1　　Ii=1

14　　0

12

T4　　T1　　T2　　T3

Si=F

**FIGURE 3**

Ii

A=1　　3

2a　　2b　　4a　　4b　　5　　6

12　　　　　　　14

1a　T4　1b　T1　1c　T2　1d　2d

Si=0

**FIGURE 4**

FIGURE 5

**FIGURE 6**

FIGURE 8

FIGURE 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3600604 (G.M.THORNE-BOOTH) <br> * colonne 3, ligne 33 – colonne 5, ligne 5; figure 1 * <br> --- | 1-2, 4 | G05B9/02 <br> H03K19/007 <br> G06F11/00 |
| A | DE-A-3621022 (LICENTIA PATENT-VERWALTUNGS-GMBH) <br> * colonne 2, ligne 16 – colonne 3, ligne 68; figure 1 * <br> --- | 1 | |
| A | FR-A-1266500 (SOCIETE ALSACIENNE DE CONSTRUCTIONS MECANIQUES) <br> --- | | |
| A | PROCEEDINGS OF THE EIGHTH INTERNATIONAL SYMPOSIUM ON MULTIPLE-VALUED LOGIC <br> 1978, ROSEMONT,ILLINOIS,US <br> pages 287 - 295; J.E.SMITH AND J.DUSSAULT: "FAULT SECURE MULTIPLE-VALUED LOGIC NETWORKS" <br> --- | | |
| A | DE-A-3519252 (FRESENIUS AG.) <br> --- | | |
| A | EP-A-0101037 (HITACHI LTD.) <br> ----- | | |

**DOMAINES TECHNIQUES RECHERCHES (Int. Cl.5)**

G05B
H03K
G06F
H01H

Le présent rapport a été établi pour toutes les revendications

| Lieu de la recherche | Date d'achèvement de la recherche | Examinateur |
|---|---|---|
| LA HAYE | 12 AVRIL 1990 | CARTRYSSE A.A |